# FASCICULE DE BREVET EUROPEEN

(11) **EP 3 402 975 B1**
(45) Date de publication et mention de la délivrance du brevet: **19.08.2020**
(21) Numéro de dépôt: 16831498.7
(22) Date de dépôt: 21.12.2016
(51) Int. Cl.: F02D 41/00, F02B 37/16, F02B 37/18, F02D 41/12, F02B 37/12

(54) **PROCÉDÉ DE PILOTAGE D'UN MOTEUR THERMIQUE TURBOCOMPRESSÉ DE VÉHICULE AUTOMOBILE**
VERFAHREN ZUR VERWALTUNG EINES AUFGELADENEN KRAFTFAHRZEUGMOTORS
METHOD FOR MANAGING A TURBOCHARGED MOTOR VEHICLE ENGINE

(30) Priorité: 14.01.2016 FR 1650281
(43) Date de publication de la demande: 21.11.2018
(73) Titulaire: PSA AUTOMOBILES S.A., 78300 Poissy (FR)
(72) Inventeur: LEFEBVRE, Ludovic, 92700 Colombes (FR)
(86) Numéro de dépôt international: PCT/FR2016/053606
(87) Numéro de publication internationale: WO 2017/121939

(56) Documents cités:
- EP-A1- 2 840 248
- EP-A2- 2 216 694
- DE-A1- 2 441 804
- DE-A1-102005 010 792

## Description

La présente invention porte sur un procédé de pilotage d'un moteur thermique turbocompressé de véhicule automobile. L'invention trouve une application particulièrement avantageuse dans le domaine des motorisations à essence comme divulgué en document DE102005010792A1, EP2216694A2 ou EP2840248A1.

Les contraintes réglementaires imposées sur le niveau des émissions polluantes telles que des hydrocarbures imbrûlés, des oxydes d'azote, du monoxyde de carbone, des gaz à effet de serre comme le dioxyde de carbone, ainsi que les contraintes imposées sur le niveau de la consommation en carburant des véhicules automobiles guident le développement des futurs groupes motopropulseurs (GMP) vers la réduction de la taille du moteur (ou "downsizing" en anglais), la réduction du régime moteur (ou "downspeeding" en anglais) et l'augmentation du couple du moteur (ou "uptorquing" en anglais).

La réduction de la taille du moteur consiste à abaisser par différents procédés la cylindrée du moteur thermique sans en dégrader la puissance finale, ou d'en augmenter la puissance à iso-cylindrée. L'objectif recherché est l'amélioration des puissances et couples spécifiques, la diminution des consommations spécifiques, et la diminution des émissions polluantes, en faisant préférentiellement fonctionner le moteur thermique dans sa plage de rendement maximal et de consommation spécifique minimale.

Par ailleurs, en association avec la réduction de taille du moteur, le "downspeeding" vise à abaisser le régime moteur afin de réduire les frictions et la consommation en carburant, sans diminuer les performances. Cette technique consiste notamment à "allonger" les rapports de boîte de vitesses en imposant des vitesses véhicule sans cesse plus grandes pour un régime moteur situé par exemple autour de 1000 tours/min. Le régime de rotation du moteur thermique est ainsi réduit pour une vitesse véhicule donnée.

A cette fin, il convient d'optimiser la combustion et surtout d'apporter un maximum de couple dès les plus bas régimes de rotation du moteur thermique de manière à fournir la puissance à la roue, non plus majoritairement grâce à la vitesse de rotation du moteur, mais plutôt par le couple effectif délivré. Le principe "d'uptorquing" consiste donc à mettre en oeuvre des procédés permettant d'augmenter, à un régime moteur donné, le couple effectif produit par le moteur et à abaisser le régime minimal d'obtention du couple maximal aussi bien pour des performances dites "stabilisées", c'est-à-dire en s'affranchissant du délai d'obtention de ces performances, que pour des performances dites "transitoires", c'est-à-dire lorsque le couple et la puissance sont disponibles après un délai donné après la sollicitation du moteur thermique, généralement de 1 à 2 secondes.

Pour ainsi réduire la consommation de carburant tout en conservant le confort de conduite, le brio, l'agrément, et la capacité à déplacer au moins le poids du véhicule y compris le conducteur avec une bonne capacité d'accélération, le développement des motorisations thermiques s'oriente vers la diminution de leur cylindrée tout en les suralimentant par l'intégration d'un turbocompresseur et/ou d'un compresseur volumétrique. Dans les deux cas, la pression des gaz admis est augmentée pour mieux remplir les cylindres en mélange air/carburant afin d'augmenter la puissance spécifique du moteur thermique. On peut ainsi augmenter la puissance du moteur à iso-cylindrée ou en diminuer la consommation avec une cylindrée réduite.

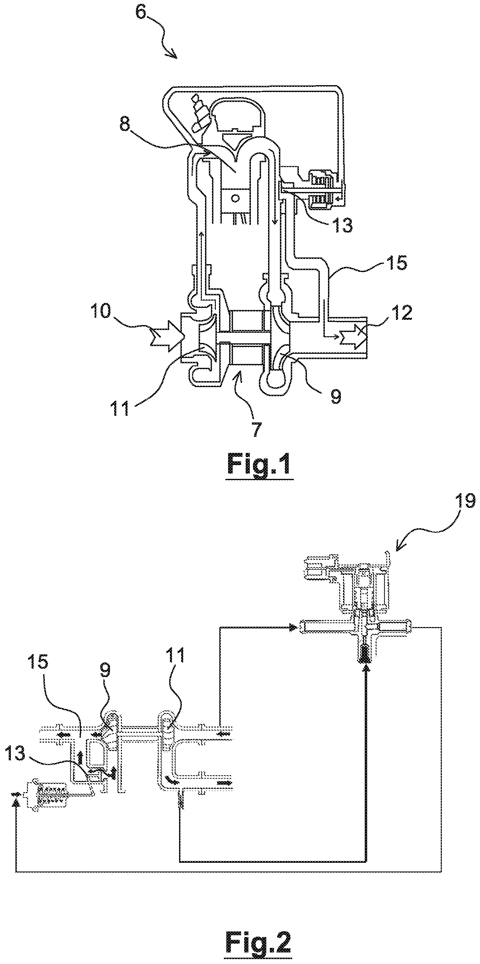

Comme cela est visible sur la figure 1, dans le cas du turbocompresseur 7, le compresseur 11 des gaz d'admission 10 est entraîné par une turbine 9 animée par la vitesse et l'enthalpie des gaz d'échappement 12 (vouées à être perdues ou dissipées à l'environnement extérieur, sous capot ou sous caisse), qui cèdent une partie de leurs énergies cinétique et thermique pour faire tourner la turbine 9. Ainsi, le turbocompresseur 7 ne consomme donc pas de puissance sur le vilebrequin en sortie du moteur 6 thermique, contrairement à un compresseur volumétrique entraîné par une courroie ou par un enchaînement d'engrenages animés par le vilebrequin. En revanche, un turbocompresseur 7 n'est efficace qu'au-delà d'un certain régime moteur, contrairement au compresseur mécanique efficace dès les plus bas régimes. De plus, lors d'une forte demande d'accélération, le turbocompresseur 7 peut manifester un certain temps de réponse, délai pendant lequel la quantité de gaz d'échappement 12 ne suffit pas encore à faire tourner la turbine 9 au régime idéal, notamment dû à son inertie : ce temps de réponse (ou "turbo lag" en anglais) est inexistant dans le cas d'un compresseur mécanique.

Ces inconvénients peuvent être résolus par l'adoption :
- d'une turbine 9 à géométrie variable, plus efficace à bas régimes. Cette technologie, largement diffusée sur les motorisations Diesel suralimentées, n'est pour l'instant pas appliquée aux motorisations essence suralimentées à cause des contraintes thermiques induites (au moins jusqu'à 950°C et même au-delà de 1050°C en turbo essence, contre jusqu'à 780 à 870°C en Diesel) que ne peuvent supporter, pour rester économiquement viable, les ailettes et le mécanisme générant la variation de géométrie;
- ou d'une suralimentation multiple (généralement bi- ou tri-suralimentation), se caractérisant soit par l'association de plusieurs turbocompresseurs 7 de géométrie différente en série et/ou en parallèle (un turbocompresseur avec une turbine et un compresseur de tailles réduites pour en réduire l'inertie et donc en favoriser l'efficacité dès les bas régimes, associé à un turbocompresseur de plus grandes dimensions qui prend le relais ou complète la suralimentation fournie aux régimes supérieurs pour produire la puissance requise), ou par l'ajout, en série du compresseur 11, d'un compresseur électrique (donc non entraîné par les gaz d'échappement 12 mais par une source d'énergie électrique externe, telle qu'une batterie 12V ou un alternateur entraîné par le moteur ou une batterie 48V pour des véhicules à énergie de traction en partie électrique (dit "mild-hybrid" en anglais) ou de tension supérieure pour des véhicules à énergie de traction majoritairement électrique (dit "full hybrid" en anglais), et dans tous les cas se caractérisant par son coût additionnel important et par des difficultés d'implantation dans le sous-capot des véhicules modernes.

Néanmoins, pour les motorisations mono-suralimentées fortement réduites en cylindrée, les caractéristiques du turbocompresseur 7 doivent satisfaire la puissance maximale du moteur 6 thermique (ce qui requiert notamment une turbine 9 et un compresseur 11 de gros diamètre, donc une machine de suralimentation avec une inertie importante) et dans le même temps des performances en fonctionnement transitoire (couple dès les plus bas régimes moteur, temps de montée en couple, régime d'accrochage, etc.) qu'une faible inertie favoriserait.

Ainsi, un turbocompresseur 7 présentant un compresseur 11 et une turbine 9 de grandes tailles sera idéal pour fournir une pression de suralimentation importante et donc aider le moteur 6 à délivrer une puissance spécifique élevée mais aura d'assez faibles performances en transitoire dû à sa grande inertie. Dans ces conditions le choix du turbocompresseur 7 d'une telle motorisation, mono-suralimentée pour des raisons de coût, est donc un compromis entre ces exigences souvent divergentes et, à la différence des motorisations des compétitions sportives, sans compromis sur la consommation et sur la fiabilité, s'agissant souvent de véhicules de grande diffusion.

Par ailleurs, un turbocompresseur 7 dont la turbine 9 est entraînée par les gaz d'échappement 12 juste à la sortie du moteur 6 thermique suralimenté, ne doit pas voir la vitesse de rotation de la turbine 9 et du compresseur 11 dépasser un seuil maximal afin de protéger le moteur 6 thermique de pressions de suralimentation trop élevées. A cette fin, il est connu, comme représenté sur les figures 1 et 2, d'équiper le turbocompresseur 7 d'une soupape de décharge 13 qui limite la pression et le débit des gaz d'échappement 12 sur la roue de turbine 9 du turbocompresseur 7, en ouvrant une conduite de dérivation 15 afin de limiter la pression et le débit des gaz d'échappement à travers la turbine 9. On réduit ainsi la vitesse de rotation de la turbine 9 et donc aussi celle du compresseur 11 qui en est mécaniquement solidaire, ce qui limite ainsi la pression de suralimentation.

Cette soupape de décharge 13 (appelée aussi "wastegate" en anglais) peut être externe ou interne au carter de turbine. Cette soupape de décharge 13 peut prendre la forme d'une soupape, analogue à celles d'échappement au sein de la culasse du moteur 6 thermique, ou s'avérer être un boîtier papillon, du même type que celui régulant le débit d'air d'admission du moteur 6 thermique.

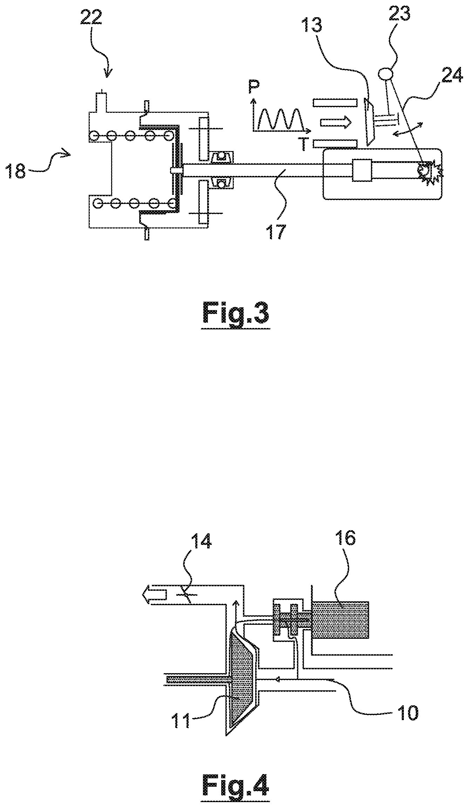

Le contrôle de la soupape de décharge 13 peut être :
- électrique;
- hydraulique, dont le fluide de contrôle est l'huile de lubrification du moteur 6 thermique et des paliers du turbocompresseur 7, la pression d'huile agissant généralement dans le sens de la fermeture de la soupape de décharge 13;
- pneumatique 22 (cf. figure 3), en appliquant à un actionneur 18 de la soupape de décharge 13 la pression de suralimentation prise en sortie du compresseur 11 (cf. figure 1). La régulation est alors purement mécanique, par équilibre des forces s'exerçant de part et d'autre de la soupape 13. Ce système peut néanmoins s'enrichir d'un système électronique 19 de contrôle de pression (cf. figure 2) et d'une seconde arrivée de la pression de suralimentation sur le côté opposé à l'actionneur 18, qui agit alors à l'opposé de la première entrée afin de favoriser la fermeture de la soupape 13. Ce dispositif améliore la capacité de la soupape de décharge 13 à rester fermée même lorsque s'y appliquent de fortes pressions.

Toutefois, la commande de la soupape de décharge 13 peut s'avérer être source de bruit si la liaison pivot 23 entre un axe du levier externe 24 qui entraîne en translation ou rotation la soupape 13 et l'extrémité d'une tige 17 de l'actionneur 18 (par exemple pneumatique 22 comme illustré sur la figure 3, mais qui peut aussi être électrique) présente un jeu. Ce jeu est nécessaire à la réalisation de la commande de la soupape de décharge 13 conformément aux caractéristiques fonctionnelles attendues (étanchéité, temps de réponse, etc.), mais ce jeu peut être source de chocs entre le levier externe 24 et la tige 17 métallique de l'actionneur 18. Ces chocs métal/métal sont générés par la pulsation des gaz d'échappement 12 à la sortie du moteur 6 thermique (réalisation du temps d'échappement dans chacun des cylindres du moteur 6) et sont aggravés par les dilatations différentes entre les matériaux de l'axe du levier externe 24 (325 à 625°C) et la tige 17 de l'actionneur 18 (250 à 575°C). L'excitation du système peut s'avérer critique sur une plage donnée de course de l'actionneur 18, intermédiaire entre la pleine ouverture et la pleine fermeture.

Par ailleurs, ces chocs métal/métal répétés pour un pilotage nominal de l'actionneur 18 de la soupape de décharge 13, accélèrent au fil du temps l'usure de la liaison pivot 23, conduisant, à plus ou moins long terme, à la défaillance de la soupape 13 avec les conséquences inévitables sur la fiabilité du turbocompresseur 7 et du moteur 6 thermique si la pression de suralimentation n'est plus limitée. Enfin, ces chocs surviennent à une fréquence telle qu'ils peuvent leurrer la détection de cliquetis par capteur fixé sur le carter-cylindres, en générant de fausses détections conduisant le système de contrôle du moteur 6 thermique à lancer des actions préventives et curatives du cliquetis (enrichissement en carburant du mélange air/carburant, correction de l'avance à l'allumage et/ou limitation du remplissage qui conduisent à une surconsommation, réduction des performances moteur, coupures d'injection, etc.) sans qu'elles soient nécessaires puisqu'il n'y a pas réellement de cliquetis.

A l'image de la soupape de décharge 13 qui limite la pression de suralimentation en ouvrant une conduite de dérivation 15 de la turbine 9 par les gaz d'échappement 12 afin de réduire la vitesse de rotation de la turbine 9 et du compresseur 11 ainsi que la pression et le débit des gaz d'échappement 12 sur la roue de turbine, le turbocompresseur 7 de motorisations suralimentées essence est généralement également équipé d'une seconde soupape de décharge 16 (appelée "dump valve" en anglais) positionnée au niveau du compresseur 11 (cf. figure 4). Plus précisément, cette seconde soupape de décharge 16 située en amont du répartiteur d'admission, entre le compresseur 11 et le boîtier papillon 14 d'admission, vise à protéger le compresseur 11 du pompage. A l'accélération, le compresseur 11 doit augmenter la pression de suralimentation de l'air ou des gaz d'admission 10 et donc la soupape 16 est alors fermée. A la décélération, en phase de lâcher de pied ou pendant un changement de rapport de boîte de vitesses, le boîtier papillon 14 se referme mais l'air d'admission est encore comprimé. La surpression ainsi générée, amplifiée par la dépression dans le répartiteur d'admission due à l'aspiration dans les cylindres, peut entraîner le pompage du compresseur 11. Le pompage est dû à une modification de l'écoulement au niveau des ailettes du compresseur 11 qui génère une réduction forte du débit d'air au niveau du compresseur 11 (voire un refoulement du débit vers l'amont du compresseur 11), une forte élévation de la température en amont du compresseur 11 en cas de refoulement de débit (gaz comprimés chauds refoulés), des oscillations de pression en aval du compresseur 11 et l'apparition d'un bruit caractéristique, audible et désagréable, de claquement important, et qui surtout peut provoquer la ruine du compresseur en endommageant les ailettes de la roue compresseur 11 et/ou le palier en cas de pompage maintenu. La surpression augmente également le temps de réponse du turbocompresseur 7 à la reprise de l'accélération.

Comme illustré sur la figure 4, la soupape 16 génère alors par son ouverture (favorisée par la surpression et la dépression régnant de part et d'autre de la soupape 16) un débit d'air local autour du compresseur 11. L'air empruntant cette dérivation est réintroduit en amont du compresseur 11 et, si le moteur 6 thermique en est équipé, en amont du débitmètre pour ne pas impacter la richesse du mélange air/carburant à la reprise de l'accélération.

L'invention vise à remédier à au moins un des inconvénients précités en proposant un procédé de pilotage d'un moteur thermique de véhicule automobile comportant un turbocompresseur qui comprend un compresseur et une turbine, le compresseur n'étant pas associé à une soupape de décharge d'air du compresseur, dite « dump valve » qui vise à protéger le compresseur du pompage et la turbine étant associé à une soupape de décharge, dite « waste gâte » qui limite la pression et le débit des gaz d'échappement dans cette turbine, et un boîtier papillon pour autoriser un passage d'air à l'admission, caractérisé en ce que ledit procédé comporte :
- une étape de détection du pompage du compresseur,
- une étape de détermination d'une première consigne de remplissage en air correspondant à une limite de pompage à appliquer audit boîtier papillon,
- une étape de correction de ladite première consigne de remplissage,
- une étape de détermination d'une deuxième consigne de remplissage en air correspondant à un remplissage maximal permettant de respecter une consigne de couple correspondant à une volonté d'un conducteur,
- une étape d'arbitrage entre lesdites première et deuxième consignes de remplissage en air,
- une étape de positionnement dudit boîtier papillon en fonction de ladite consigne de remplissage déterminée suite à la mise en oeuvre de ladite étape d'arbitrage, et
- une étape de positionnement de la soupape de décharge associée à la turbine du turbocompresseur en fonction de conditions d'utilisation du moteur thermique, ces conditions d'utilisation étant typées dynamiques longitudinales, typées pleine charge continue en stabilisé, typées économie de carburant ou favorisant l'accélération de la montée en température et l'amorçage rapide des organes de dépollution.

L'invention permet ainsi une optimisation du compromis entre les performances transitoires et stabilisées du moteur thermique, et une meilleure gestion de consommation de carburant sous contraintes acoustiques et vibratoires. En outre, du fait de son implémentation dans le calculateur moteur, l'invention ne nécessite pas l'ajout de nouveaux composants et est donc avantageuse en termes de coûts.

Selon une mise en oeuvre, le procédé comporte l'étape de détecter le pompage au niveau du compresseur.

Selon une mise en oeuvre, le procédé comporte l'étape de prendre en compte uniquement la première consigne de remplissage lors d'une phase de coupure d'injection du moteur thermique.

Selon une mise en oeuvre, le procédé comporte en outre l'étape d'inhiber la mise en oeuvre dudit procédé si un niveau de dépression d'un réservoir de freinage du véhicule est jugé insuffisant pour assurer le freinage du véhicule.

Selon une mise en oeuvre, le procédé comporte en outre l'étape d'inhiber la mise en oeuvre dudit procédé si le ratio de compression de l'air au niveau du compresseur devient inférieur à un seuil déterminé.

Selon une mise en oeuvre, le seuil déterminé de ratio de compression de l'air au niveau du compresseur est compris entre 1,05 et 1,2.

Selon une mise en oeuvre, lorsque les conditions d'utilisation dudit moteur thermique sont typées dynamiques longitudinales pour donner la priorité à la performance du moteur thermique, le positionnement de la soupape de décharge associée à la turbine du turbocompresseur est compris entre une position de fermeture complète à une position partiellement fermée.

Selon une mise en oeuvre, lorsque les conditions d'utilisation dudit moteur thermique sont typées pleine charge continue en stabilisé, le positionnement de la soupape de décharge associée à la turbine du turbocompresseur est entre une position partiellement ouverte à une position d'ouverture complète.

Selon une mise en oeuvre, lorsque les conditions d'utilisation dudit moteur thermique sont typées économie de carburant, le positionnement de la soupape de décharge associée à la turbine du turbocompresseur est, en fonction de seuils de charge croissants appliqués au moteur thermique, dans une position de fermeture partielle en deçà d'un premier seuil de charge, dans une position d'ouverture partielle entre ce premier seuil et un second seuil, dans une position de pleine ouverture entre ce second seuil et un troisième seuil, dans une position intermédiaire au-delà de ce troisième seuil de charge.

Selon une mise en oeuvre, lorsque les conditions d'utilisation dudit moteur thermique sont typées en faveur de l'accélération de la montée en température et l'amorçage rapide des organes de dépollution, le positionnement de la soupape de décharge associée à la turbine du turbocompresseur est à une position pleinement ouverte.

Selon une mise en oeuvre, une distinction entre lesdites conditions d'utilisation est effectuée par analyse d'au moins un paramètre parmi : le régime moteur et son gradient temporel, le rapport de démultiplication engagé, la vitesse et l'accélération du véhicule, la charge moteur, la position du boîtier papillon, le couple volonté conducteur, la consigne de remplissage en air du moteur, la dégradation d'avance à l'allumage réalisée et la consigne de dégradation d'avance maximale pour respecter la consigne de couple volonté conducteur, la position de la pédale d'accélération et son gradient temporel, l'altitude, des informations en provenance du correcteur électronique de trajectoire, l'état thermique du moteur, la pression régnant dans le répartiteur d'admission, l'état et la disponibilité de la fourniture de vide, l'écoulement de temporisations et la position de la pédale de frein.

Selon une mise en oeuvre, ladite première consigne de remplissage est déterminée à partir de ladite limite de pompage dudit compresseur, d'une pression correspondant à une pression atmosphérique corrigée d'une perte de charge du circuit d'air en amont et d'une pression en aval dudit compresseur, d'une température d'admission en amont dudit compresseur, et d'un débit d'air d'admission mesuré par un débitmètre ou estimé par un modèle de remplissage.

Selon une mise en oeuvre, l'étape de correction de la première consigne de remplissage s'effectue en fonction des pressions en amont et en aval du compresseur si une durée de temporisation est dépassée depuis l'instant où survient une forte diminution de charge du moteur thermique de sorte que le boîtier papillon, à partir d'une position de pleine ouverture, se referme immédiatement et adopte une position de totale fermeture.

Selon une mise en oeuvre, la détection du pompage du compresseur comprend les étapes de :
- filtrage de la pression d'air en aval du compresseur ou du débit d'air d'admission,
- calcul du nombre d'oscillations de la pression d'air en aval du compresseur ou du débit d'air d'admission autour de leur valeur filtrée,
- calcul des amplitudes et des fréquences de ces oscillations.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'un moteur thermique suralimenté;

La figure 2 est une représentation schématique d'un turbocompresseur équipé d'un système électronique de contrôle de pression;

La figure 3 est une représentation schématique illustrant la zone de chocs entre un levier métallique externe et une tige métallique d'un actionneur de type pneumatique commandant un déplacement d'une soupape de décharge associée à la turbine du turbocompresseur;

La figure 4 est une représentation schématique illustrant le fonctionnement d'une soupape de décharge associée au compresseur du turbocompresseur au cours d'une décélération du véhicule automobile;

La figure 5 est une représentation schématique des blocs fonctionnels permettant la mise en oeuvre du procédé de pilotage moteur selon la présente invention;

La figure 6a représente des courbes d'évolution temporelles d'une consigne de remplissage en air correspondant à une limite de pompage, d'une consigne de remplissage en dégradation d'avance maximale, d'un ratio entre la pression aval et amont mesurée au niveau du boîtier papillon, et d'un état de transition entre les deux types de remplissage, sans la mise en oeuvre de l'invention;

La figure 6b représente les courbes d'évolution temporelles des grandeurs de la figure 6a en y ajoutant l'évolution temporelle de la consigne de remplissage après arbitrage lors de la mise en oeuvre du procédé selon l'invention;

La figure 6c représente un graphique illustrant les courbes d'évolution temporelles des grandeurs de la figure 6b en y ajoutant l'évolution temporelle de la pression en aval du compresseur et la position du boîtier papillon déterminée lors de la mise en oeuvre du procédé selon l'invention.

La présente invention consiste à corriger l'ouverture du boîtier papillon 14 pour la faire correspondre à un débit d'air d'admission en limite de pompage et en lui faisant emprunter une refermeture progressive pour limiter la chute de débit d'air au niveau du boîtier papillon 14 au moment d'une demande de baisse de couple par le conducteur (lâcher de pied, etc.), avec pour conséquence une dégradation d'avance maximale à l'allumage pour respecter la consigne de couple.

A cet effet, une première étape consiste à détecter le phénomène de pompage au niveau du compresseur 11. Le pompage a lieu à une fréquence spécifique, en fonction du turbocompresseur 7 et en fonction de la géométrie du circuit d'admission d'air. Le filtrage de type passe-bas de la pression P2 en aval du compresseur 11 ou du débit d'air d'admission, le calcul du nombre d'oscillations de la pression P2 ou du débit d'air d'admission autour de leurs valeurs filtrées et le calcul des amplitudes et des fréquences d'oscillation, permettent de détecter le pompage du compresseur 11.

Le mode de détection explicité ci-avant est uniquement curatif : on attend que le pompage soit présent au niveau du compresseur 11 et on en traite un signal caractéristique pour en juger la sévérité (amplitude, nombre et fréquence des oscillations) et selon cette sévérité sont déroulées les actions décrites plus loin des blocs fonctionnels A à E.

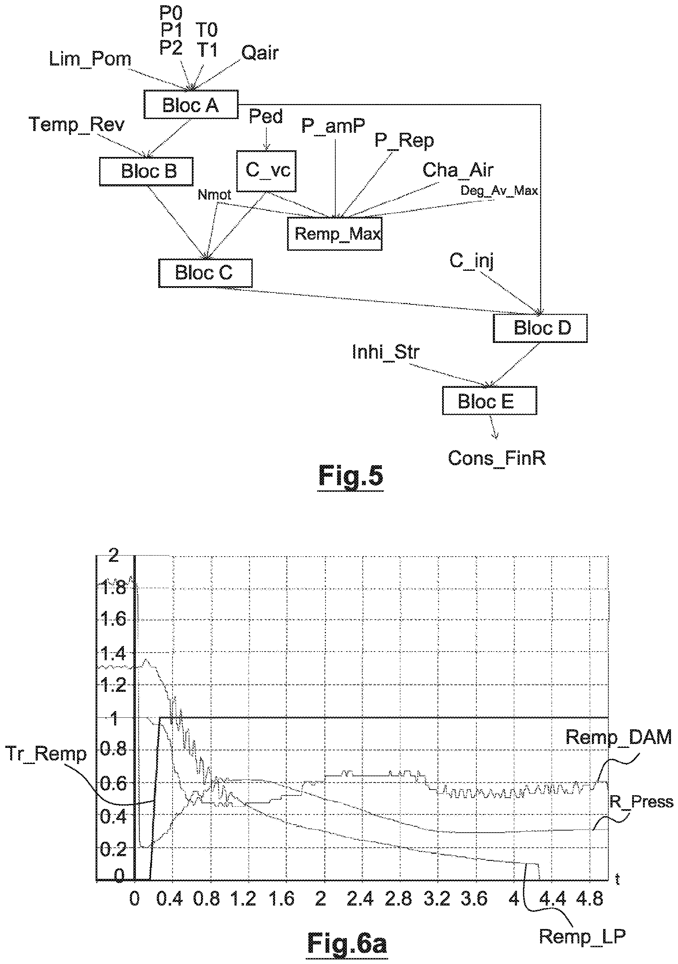

Comme cela est illustré par la figure 5, un premier bloc fonctionnel A détermine une première consigne de remplissage Remp_LP en air correspondant à une limite de pompage à appliquer au boîtier papillon 14, à partir de :
- la limite de pompage Lim_Pom du compresseur 11 renseignée par une table dans le champ compresseur (rapport entre les pressions amont et aval compresseur 11, débit d'air au compresseur 11 ramené dans les conditions normales de température et de pression, en fonction d'une température de référence de 20°C et d'une pression de référence de 1 bar) ;
- la pression P1 en amont du compresseur 11, qui correspond à la pression atmosphérique P0 corrigée de la perte de charge du circuit d'air en amont du compresseur 11, dont le filtre à air ;
- la pression P2 en aval du compresseur 11 ;
- la température T1 de l'air d'admission en amont du compresseur 11, qui correspond à la température de l'air en entrée du circuit d'air d'admission (ici, idéalement égale à la température ambiante T0, mais elle dépend fortement du lieu d'implantation de la bouche d'aspiration d'air. En effet, la prise d'air peut être située directement dans la calandre du véhicule en amont des échangeurs ou dans le sous-capot dans une zone "froide", par exemple en arrière d'un phare) réchauffée par l'environnement thermique en sous-capot (rayonnement et convection depuis les organes de dépollution, convection en sortie des échangeurs, convection éventuellement forcée par la mise en action du groupe moto-ventilateur) selon l'implantation du circuit d'air d'admission dans le sous-capot et selon la nature des matériaux mis en oeuvre;
- le débit d'air d'admission Qair mesuré par un débitmètre ou estimé par un modèle de remplissage, et ramené dans les conditions normales de température et de pression à partir d'une température et d'une pression de référence.

Un second bloc fonctionnel B corrige cette première consigne de remplissage Remp_LP si une temporisation préétablie est révolue Temp_Rev et la corrige en fonction des pressions P1 en amont et P2 en aval du compresseur 11. Cette correction a pour effet de réduire la suralimentation en refermant davantage le boîtier papillon 14. Cette temporisation démarre à partir de l'instant où survient une forte diminution de charge du moteur 6 thermique, par exemple en phase de lâcher de pied, tel que le boîtier papillon 14 se referme et adopte une position de totale ou quasi-totale fermeture à partir d'une position immédiatement antérieure du boîtier papillon 14 en position de pleine ou quasi-totale ouverture.

Un troisième bloc fonctionnel C arbitre les différentes consignes de débit d'air en donnant la priorité au suivi du couple volonté conducteur C_vc donné par la position pédale Ped d'accélération et un gradient de mesure degré d'inclinaison/temps, entre la consigne remplissage en air Remp_LP correspondant à la limite pompage et une deuxième consigne de remplissage maximal Remp_Max permettant de respecter la consigne de couple du conducteur. La consigne de remplissage maximal Remp_Max est calculée en fonction du régime moteur Nmot, de la pression P_amP d'air en amont du boîtier papillon 14 et de la pression P_Rep dans le répartiteur d'admission, de la charge moteur en air Cha_Air requise et de la dégradation d'avance maximale Deg_Av_Max que le moteur 6 peut réaliser sous contrainte combustion et protection composant (enrichissement en carburant du mélange admis dans la chambre de combustion 8 pour refroidir par évaporation de l'essence certains organes tels le collecteur d'échappement, la turbine 9 du turbocompresseur 7 et son carter ou le catalyseur). En fonction de la consigne d'arbitrage, le bloc fonctionnel C détermine la position Pos_Pap du boîtier papillon 14 à adopter et recalcule la pression Press_Comp aval compresseur résultante.

Le bloc fonctionnel C réalise ainsi le contrôle du débit d'air admis dans la chambre de combustion 8. Selon une première configuration, si la consigne de remplissage en air est inférieure à la consigne de remplissage en air Remp_LP correspondant à la limite pompage, c'est cette consigne Remp_LP qui est appliquée et le débit d'air admis dans la chambre de combustion 8 est le débit d'air correspondant à cette consigne. Le compresseur 11 du turbocompresseur 7 est ainsi protégé du pompage. Selon une seconde configuration, si la consigne de remplissage en air est supérieure à la consigne de remplissage en air Remp_LP correspondant à la limite pompage, la consigne de remplissage appliquée est celle réalisant l'admission dans la chambre de combustion 8 du débit d'air permettant de respecter la consigne du couple du conducteur.

Pour illustrer la stratégie mise en oeuvre par le bloc fonctionnel C, la figure 6a détaille sur un même graphe les évolutions temporelles des différentes grandeurs qui viennent d'être évoquées lors de l'apparition à t=0s d'une situation de vie provoquant sans cette stratégie le pompage du compresseur 11, par exemple un lâcher de la pédale Ped d'accélération par le conducteur. On a ainsi représenté:
- la consigne de remplissage en air Remp_LP correspondant à la limite pompage;
- la consigne de remplissage en dégradation d'avance maximale Remp_DAM;
- le ratio de pression R_Press du boîtier papillon 14. Ce ratio correspond à l'image de la position du boîtier 14 : la valeur 0 correspond à une position complètement fermée et la valeur 1 correspond à une position complètement ouverte.

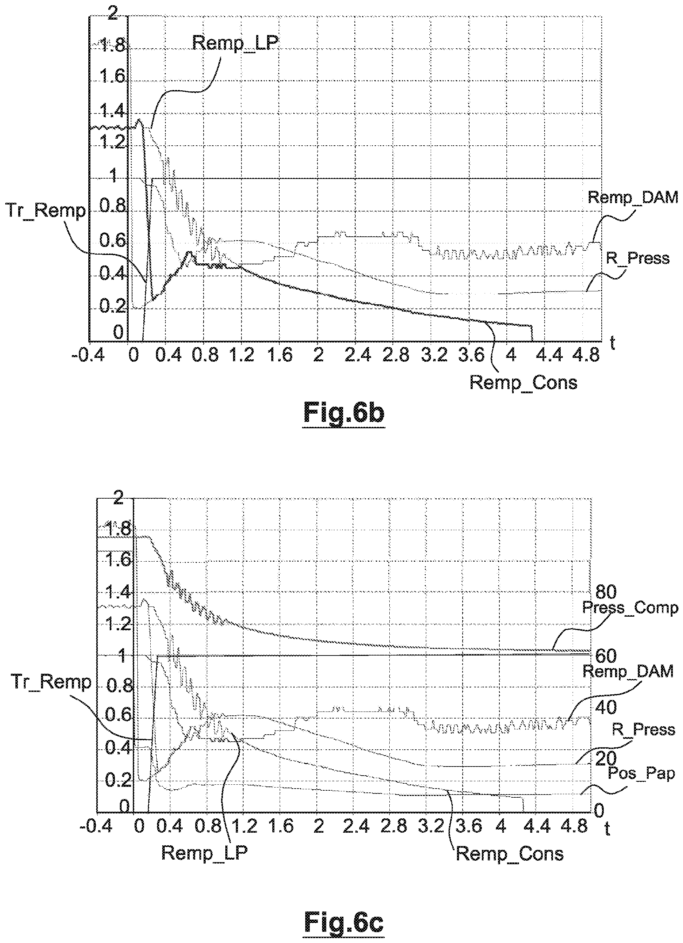

L'instant où le ratio R_Press franchit une valeur seuil, ici par exemple de 0.95 à 0.98 par valeurs supérieures, marque le début de la transition Tr_Remp entre les deux consignes de remplissage qui est réalisée au plus tard 100ms après. La référence Remp_Cons de la figure 6b est l'image de l'arbitrage réalisé par le bloc fonctionnel C. Il s'agit du lieu de consigne de remplissage minimal entre la consigne de remplissage en limite pompage Remp_LP, éventuellement corrigée par le bloc fonctionnel B, et la consigne de remplissage en dégradation d'avance maximale Remp_DAM à partir du début de transition Tr_Remp. Le bloc fonctionnel C en déduit alors la nouvelle position Pos_Pap du boîtier papillon 14, comme visible sur la figure 6c, ainsi que la nouvelle pression Press_Comp aval compresseur qui en résulte.

Dans le même temps, le bloc fonctionnel C active un procédé de limitation ou de dégradation du couple moteur si la proportion en air du mélange air/carburant admis dans la chambre de combustion 8 est encore trop importante. Un premier procédé consiste à ouvrir simultanément les soupapes d'admission et d'échappement ou d'ouvrir prématurément les seules soupapes d'échappement, afin de transférer à l'échappement l'excès d'air admis dans la chambre de combustion 8. Il s'agit, dans le cadre de la présente invention, d'un procédé non préférentiel à cause de ses impacts négatifs sur la thermique des organes de dépollution et sur les émissions polluantes. Ce procédé impose également la mise en oeuvre sur le moteur 6 thermique d'un dispositif de distribution variable, source de surcoûts non strictement nécessaires à la seule fin de limiter ou dégrader le couple moteur. Un procédé préférentiel connu de l'homme du métier consiste à dégrader l'avance à l'allumage ou à réaliser de multiples injections, notamment à proximité du point mort haut et du temps d'allumage du mélange air/carburant.

Lors de certaines situations de vie (lâcher de pied, changement de rapport de boîte de vitesses), il est connu de couper l'injection C_lnj de carburant au bout d'un certain délai, en fonction du rapport de boîte de vitesses précédent et de l'évolution du gradient de régime moteur et tant que le régime moteur est supérieur à un seuil; la réinjection est décidée si le régime moteur atteint un second seuil inférieur au précédent ou si en présence d'une demande de couple (pied posé sur la pédale Ped, demande de ré-accélération).

Comme représenté sur la figure 5, un bloc fonctionnel D applique la stratégie à suivre lorsque le moteur 6 thermique est en phase de coupure d'injection C_Inj. Dans ce cas, seule la consigne de remplissage limite pompage Remp_LP est prise en compte. En dehors de la phase de coupure d'injection C_Inj, la sortie du bloc fonctionnel D est celle du bloc fonctionnel C.

Un dernier bloc fonctionnel E détermine enfin la consigne finale de remplissage Cons_FinR à suivre par le boîtier papillon 14 en tenant compte d'une possible consigne d'inhibition de la présente stratégie, régie par des fonctions de contrôle du véhicule automobile relatives à un freinage et/ou au moteur 6 thermique. Une donnée binaire (dite "flag" en anglais) lnhi_Str en entrée du bloc E permet de contrôler l'activation ou la désactivation de la stratégie.

En effet, la mise en oeuvre de cette stratégie a tendance à ralentir la chute de pression P_Rep dans le répartiteur d'air d'admission, de par la fermeture plus progressive du boîtier papillon 14. En l'absence de pompe à vide entraînée par le moteur 6 thermique, au cas où le niveau de dépression dans le réservoir de freinage du véhicule est insuffisant pour assurer un niveau de freinage acceptable, la dépression dans le répartiteur d'air d'admission ne pourrait alors pas régénérer le niveau de vide. Dans ce cas, la stratégie est désactivée (la donnée lnhi_Str est alors égal à 1) lorsque le ratio de compression de l'air ou des gaz d'admission 10 au niveau du compresseur 11 devient inférieur à un certain seuil (par exemple 1,05 à 1,2), optimisé vis-à-vis du pompage. De même, l'utilisation de cette stratégie ayant tendance à ralentir la chute du débit d'air aspiré par le moteur 6 thermique, le fonctionnement optimal du moteur 6 thermique en condition stœchiométrique (à richesse 1) générerait une augmentation du débit de carburant, d'autant plus importante lors de roulages augmentant les phases d'utilisation du moteur 6 thermique en zone suralimentée. Dans ce cas aussi, la stratégie pourrait être désactivée afin de s'affranchir de la surconsommation qui serait ainsi générée.

Toutefois, afin de bénéficier quand même des avantages de cette stratégie, on pourra appliquer une coupure sélective de l'injection (plutôt que de désactiver la totalité des N cylindres, par coupure de l'injection C_lnj dans n cylindres avec n<N) afin de compenser l'augmentation du débit carburant. L'activation de la coupure sélective est possible lorsque la demande de couple est inférieure au couple atteignable en dégradant l'avance à l'allumage au maximum et est autorisée selon des informations transmises par le correcteur électronique de trajectoire, la transmission automatique et le contrôle moteur (régime et charge moteur). Afin de remédier à l'augmentation de la quantité d'oxygène envoyée en conséquence dans le catalyseur et en absence de filtre à particules à régénération passive, la reprise de l'injection s'effectuera avec une légère augmentation de richesse afin de purger l'oxygène alors stocké dans le catalyseur. Avec un filtre à particules à régénération passive, la présence d'oxygène est, conjuguée à un niveau thermique suffisant en entrée du filtre, favorable à sa régénération.

Par ailleurs, une position partiellement (proche de la complète fermeture) ou complètement fermée de la soupape de décharge 13 permet donc à la totalité ou la quasi-totalité des gaz d'échappement 12 de traverser la turbine 9 du turbocompresseur 7. Cette position permet, sur un point de fonctionnement basse charge stabilisé du moteur 6 thermique (à partir de la zone "atmosphérique" du champ moteur), d'en améliorer les performances en transitoire par diminution du temps de réponse du turbo ("turbo lag"). De meilleures performances transitoires améliorent l'agrément de conduite et le brio ou permettent, à brio et agrément voulus constants, d'allonger les rapports de boîte de vitesses et donc de réduire substantiellement la consommation en carburant du véhicule. En réalisant un pré-positionnement de l'actionneur 18, cette position permet aussi de s'affranchir des sources de bruit évoquées plus haut. Ce pré-positionnement permet par ailleurs d'annuler, d'une part les impacts sur la fiabilité de l'actionneur 18 de la soupape de décharge 13 et donc du turbocompresseur 7, et d'autre part les fausses détections de cliquetis et les impacts associés (surconsommation et réduction des performances moteur). La consigne de pré-positionnement de la soupape de décharge 13 est élaborée à partir d'une table avec en entrées le régime de rotation du moteur 6 thermique et la consigne de remplissage en air de ses chambres de combustion.

Ainsi, en passant d'une position de fermeture complète à une position partiellement fermée de la soupape de décharge 13, en partant d'un point de fonctionnement stabilisé en zone atmosphérique du moteur 6 thermique, le couple instantané que délivre le moteur 6 est amélioré de 10 à 25% sur les bas régimes (jusqu'à 2000 tours/min) et à partir de 30% au-delà. Le temps de réponse du turbo s'en trouve fortement réduit, ce qui améliore ainsi le couple disponible après 1 à 2 secondes. Il en résulte des performances sensiblement augmentées du véhicule:
- décollage du véhicule à partir d'une situation d'arrêt : le potentiel d'accélération avec une masse équivalente à la demi-charge utile s'en trouve amélioré d'environ 5 à 10% et la vitesse atteinte après 2s à partir du décollage s'en trouve augmentée de 7 à 15%.s
- les temps de reprises à rapport de boîte imposé, de type 30 à 60km/h en 3ème, 80 à 120 km/h sur le dernier et sur l'avant-dernier rapport, 40 à 100km/h en 4ème, qui s'effectuent moteur en pleine charge (pédale Ped d'accélération enfoncée à au moins 100%), sont réduits de 1 à 5%.

En revanche, cette position dégrade, par rapport à une position en pleine ouverture de la soupape 13 de décharge en zone de fonctionnement atmosphérique du moteur 6 thermique, où les gaz d'échappement 12 contournent la turbine 9 du turbocompresseur 7, la PMI_BP (la Pression Moyenne Indiquée en zone Basse Pression du cycle à quatre temps) et a donc un impact négatif sur la consommation de carburant à basse charge stabilisée. Pour tirer pleinement profit du pilotage de la soupape de décharge 13 proposé ici, on tient compte de la nature de la situation de vie à satisfaire, entre des conditions d'utilisation du moteur 6 thermique et du véhicule :
- typées dynamiques longitudinales (décollages, accélérations, reprises, etc.), pour lesquelles la priorité est donnée à la performance du moteur 6 thermique : pleine fermeture ou fermeture partielle de la soupape de décharge 13, en particulier en pleine charge à bas régime moteur Nmot (exemple : Nmot < 2000 tours/min) ;
- typées pleine charge continue en stabilisé pendant une durée excédent un seuil prédéterminé, de type roulage à une vitesse proche de la vitesse maximale du véhicule ou de type remorquage sur autoroute ou en montagne, si le régime Nmot et la charge moteur excèdent des seuils prédéterminés : ouverture partielle ou pleine ouverture de la soupape de décharge 13 pour protéger le turbocompresseur 7 et le moteur 6 thermique d'un surrégime de la turbine 9 ;
- typées économie de carburant (roulages clients de type ville, route ou autoroute en vitesse stabilisée et rapport de démultiplication prédéterminé - ex : 50km/h en 3ème et 4ème, 90 et 110km/h sur les dernier et avant dernier rapports, 130km/h sur le dernier rapport, profils de roulage avec vitesse véhicule en fonction du temps : position de la soupape de décharge 13 en fonction de la charge du moteur 6 thermique (PME ou pression moyenne effective, exprimée en bar) :
   - pour une charge moteur représentative d'une PME allant jusqu'à environ 1,5 bar, la soupape de décharge 13 est en position de pleine fermeture ;
   - pour une charge moteur représentative d'une PME comprise entre environ 1,5 bar et environ 4 bar, la soupape de décharge 13 est en position d'ouverture intermédiaire ou fermeture partielle ;
   - pour une charge moteur représentative d'une PME comprise entre environ 4 bar et environ 10 à 11 bar, la soupape de décharge 13 est en position de pleine ouverture ;
   - pour une charge moteur représentative d'une PME comprise entre environ 10 à 11 bar et environ 15 bar, la soupape de décharge 13 est en position d'ouverture intermédiaire ou ouverture partielle ;
- ou favorisant l'accélération de la montée en température et l'amorçage rapide des organes de dépollution : pleine ouverture de la soupape de décharge 13. Les gaz d'échappement 12 issus de la chambre de combustion 8 du moteur 6 thermique contournent ainsi la turbine 9 sans y perdre leurs énergies cinétique et thermique. L'ouverture en grand de la soupape de décharge 13 permet de contribuer à contrecarrer :
   - l'éloignement des organes de dépollution par rapport à la sortie des gaz d'échappement 12 de la chambre de combustion 8 du moteur 6 thermique, dû à l'implantation de la turbine 9 du turbocompresseur 7 entre la sortie du moteur 6 thermique et les organes de dépollution ;
   - les inerties thermiques, les capacités thermiques et la conduction de chaleur dans les matériaux du collecteur d'échappement et du carter de la turbine 9.

La distinction entre ces conditions d'utilisation est effectuée par analyse d'au moins un et de préférence de l'ensemble des paramètres suivants: le régime moteur et son gradient temporel, le rapport de démultiplication engagé, la vitesse et l'accélération du véhicule, la charge moteur, la position Pos_Pap du boîtier papillon 14, en particulier corrigée selon les étapes du procédé précitées, le couple volonté conducteur C_vc, la dégradation d'avance à l'allumage réalisée et la consigne de dégradation d'avance maximale pour respecter la consigne de couple volonté conducteur, la consigne de remplissage en air du moteur 6, la position de la pédale Ped d'accélération et son gradient temporel, l'altitude, des informations en provenance du correcteur électronique de trajectoire (par exemple, pente de la route, angle de virage), ainsi que l'état thermique du moteur 6, la pression régnant dans le répartiteur d'admission, l'état et la disponibilité de la fourniture de vide, l'écoulement de temporisations (par exemple depuis le démarrage à froid du moteur thermique 6 ou depuis la sollicitation du moteur 6 en pleine charge) et la position de la pédale de frein.

En effet, le pilotage de la soupape de décharge 13 est indissociable de la stratégie de contrôle/commande corrigeant l'ouverture du boîtier papillon 14. Si la coupure sélective n'est pas activée, la dégradation d'avance nécessaire au suivi de la consigne de couple entraine une augmentation de la température des gaz d'échappement 12; le débit d'air étant maintenu élevé pour éviter le pompage du compresseur 11, l'enthalpie récupérée par la turbine 9 augmente et la pression de suralimentation augmente. Ainsi, la position de la soupape de décharge 13 doit en tenir compte et son pré-positionnement ne doit donc pas être appliqué lorsque la stratégie de contrôle/commande explicitée ci-avant, corrigeant l'ouverture du boîtier papillon 14, est active sans coupure totale de l'injection.

Le procédé de l'invention convient particulièrement à un moteur thermique équipé d'un turbocompresseur avec seulement une soupape de décharge 13 des gaz d"échappement (« waste gate) dans la turbine et sans soupape de décharge 16 (« dump valve ») de l'air dans le compresseur.

## Revendications

1. Procédé de pilotage d'un moteur (6) thermique de véhicule automobile comportant un turbocompresseur (7) qui comprend un compresseur (11) et une turbine (9), le compresseur n'étant pas associé à une soupape de décharge d'air du compresseur, dite « dump valve » qui vise à protéger le compresseur du pompage et la turbine (9) étant associé à une soupape de décharge (13), dite « waste gâte » qui limite la pression et le débit des gaz d'échappement dans cette turbine (9), et un boîtier papillon (14) pour autoriser un passage d'air à l'admission, **caractérisé en ce que** ledit procédé comporte :
- une étape de détection du pompage du compresseur (11),
- une étape de détermination d'une première consigne de remplissage en air correspondant à une limite de pompage (Remp_LP) à appliquer audit boîtier papillon (14),
- une étape de correction de ladite première consigne de remplissage (Remp_LP),
- une étape de détermination d'une deuxième consigne de remplissage en air correspondant à un remplissage maximal (Remp_Max) permettant de respecter une consigne de couple correspondant à une volonté d'un conducteur (C_vc),
- une étape d'arbitrage entre lesdites première (Remp_LP) et deuxième (Remp_Max) consignes de remplissage en air,
- une étape de positionnement (Pos_Pap) dudit boîtier papillon (14) en fonction de ladite consigne de remplissage déterminée suite à la mise en oeuvre de ladite étape d'arbitrage et
- une étape de positionnement de la soupape de décharge (13) associée à la turbine (9) du turbocompresseur (7) en fonction de conditions d'utilisation du moteur (6) thermique, ces conditions d'utilisation étant typées dynamiques longitudinales, typées pleine charge continue en stabilisé, typées économie de carburant ou favorisant l'accélération de la montée en température et l'amorçage rapide des organes de dépollution.

2. Procédé selon la revendication 1, **caractérisé en ce que** lorsque les conditions d'utilisation dudit moteur (6) thermique sont typées dynamiques longitudinales pour donner la priorité à la performance du moteur thermique, le positionnement de la soupape de décharge (13) associée à la turbine (9) du turbocompresseur (7) est compris entre une position de fermeture complète à une position partiellement fermée.

3. Procédé selon la revendication 1, **caractérisé en ce que** lorsque les conditions d'utilisation dudit moteur (6) thermique sont typées pleine charge continue en stabilisé, le positionnement de la soupape de décharge (13) associée à la turbine (9) du turbocompresseur (7) est entre une position partiellement ouverte à une position d'ouverture complète.

4. Procédé selon la revendication 1, **caractérisé en ce que** lorsque les conditions d'utilisation dudit moteur (6) thermique sont typées économie de carburant, le positionnement de la soupape de décharge (13) associée à la turbine (9) du turbocompresseur (7) est, en fonction de seuils de charge croissants appliqués au moteur (6) thermique, dans une position de fermeture partielle en deçà d'un premier seuil de charge, dans une position d'ouverture partielle entre ce premier seuil et un second seuil, dans une position de pleine ouverture entre ce second seuil et un troisième seuil, dans une position intermédiaire au-delà de ce troisième seuil de charge.

5. Procédé selon la revendication 1, **caractérisé en ce que** lorsque les conditions d'utilisation dudit moteur (6) thermique sont typées en faveur de l'accélération de la montée en température et l'amorçage rapide des organes de dépollution, le positionnement de la soupape de décharge (13) associée à la turbine (9) du turbocompresseur (7) est à une position pleinement ouverte.

6. Procédé selon l'une quelconque des revendications précédentes, **caractérisé en ce qu'**une distinction entre lesdites conditions d'utilisation est effectuée par analyse d'au moins un paramètre parmi : le régime moteur et son gradient temporel, le rapport de démultiplication engagé, la vitesse et l'accélération du véhicule, la charge moteur, la position (Pos_Pap) du boîtier papillon (14), le couple volonté conducteur (C_vc), la consigne de remplissage en air du moteur (6), la dégradation d'avance à l'allumage réalisée et la consigne de dégradation d'avance maximale pour respecter la consigne de couple volonté conducteur, la position de la pédale (Ped) d'accélération et son gradient temporel, l'altitude, des informations en provenance du correcteur électronique de trajectoire, l'état thermique du moteur (6), la pression régnant dans le répartiteur d'admission, l'état et la disponibilité de la fourniture de vide, l'écoulement de temporisations et la position de la pédale de frein

7. Procédé selon l'une quelconque des revendications précédentes, **caractérisé en ce qu'**il comporte l'étape de prendre en compte uniquement ladite première consigne de remplissage (Remp_LP) lors d'une phase de coupure d'injection (C_Inj) dudit moteur (6) thermique.

8. Procédé selon l'une quelconque des revendications précédentes, **caractérisé en ce qu'**il comporte en outre l'étape d'inhiber la mise en oeuvre dudit procédé si un niveau de dépression d'un réservoir de freinage du véhicule est jugé insuffisant pour assurer le freinage du véhicule.

9. Procédé selon l'une quelconque des revendications précédentes, **caractérisé en ce qu'**il comporte en outre l'étape d'inhiber la mise en oeuvre dudit procédé si le ratio de compression de l'air au niveau du compresseur (11) devient inférieur à un seuil déterminé.

10. Procédé selon la revendication 9, **caractérisé en ce que** le seuil déterminé de ratio de compression de l'air au niveau du compresseur est compris entre 1,05 et 1,2.

11. Procédé selon l'une quelconque des revendications précédentes, **caractérisé en ce que** ladite première consigne de remplissage (Remp_LP) est déterminée à partir de ladite limite de pompage (Lim_Pom) dudit compresseur (11), d'une pression (P1) correspondant à une pression atmosphérique corrigée d'une perte de charge du circuit d'air en amont et d'une pression (P2) en aval dudit compresseur (11), d'une température (T1) d'admission en amont dudit compresseur (11), et d'un débit d'air d'admission (Qair) mesuré par un débitmètre ou estimé par un modèle de remplissage.

12. Procédé selon l'une quelconque des revendications précédentes, **caractérisé en ce que** l'étape de correction de la première consigne de remplissage (Remp_LP) s'effectue en fonction des pressions en amont (P1) et en aval (P2) du compresseur si une durée de temporisation est dépassée depuis l'instant où survient une forte diminution de charge du moteur (6) thermique de sorte que le boîtier papillon (14), à partir d'une position de pleine ouverture, se referme immédiatement et adopte une position de totale fermeture.

13. Procédé selon l'une quelconque des revendications précédentes, **caractérisé en ce que** la détection du pompage du compresseur (11) comprend les étapes de :
- Filtrage de la pression d'air en aval du compresseur (11) ou du débit d'air d'admission,
- Calcul du nombre d'oscillations de la pression d'air en aval du compresseur (11) ou du débit d'air d'admission autour de leur valeur filtrée,
- Calcul des amplitudes et des fréquences de ces oscillations.

## Patentansprüche

1. Verfahren zum Steuern eines Kraftfahrzeug-Wärmemotors (6), umfassend einen Turbolader (7), der einen Kompressor (11) und eine Turbine (9) umfasst, wobei der Kompressor keinem Druckbegrenzungsventil zugeordnet ist Kompressorluft, bekannt als "Ablassventil", das den Kompressor vor dem Pumpen schützen soll, und die Turbine (9), die mit einem Auslassventil (13) verbunden ist, bekannt als "Abfalltor", das den Druck und den Durchfluss von begrenzt Abgas in dieser Turbine (9) und ein Drosselklappengehäuse (14) zum Zulassen eines Luftdurchgangs am Einlass, **gekennzeichnet dadurch, dass** das Verfahren umfasst:
einen Schritt zum Erfassen des Pumpens des Kompressors (11),
einen Schritt zum Bestimmen einer ersten Luftfüllanweisung, die einer Pumpgrenze (Remp_LP) entspricht, die auf das Schmetterlingsgehäuse (14) angewendet werden soll,
ein Schritt des Korrigierens der ersten Füllanweisung (Remp_LP),
ein Schritt des Bestimmens einer zweiten Luftfüllanweisung, die einer maximalen Befüllung entspricht (Remp_Max), die es ermöglicht, eine Drehmomentanweisung zu erfüllen, die einem Willen eines Fahrers entspricht (C_vc),
ein Schritt der Schiedsgerichtsbarkeit zwischen den ersten (Remp_LP) und zweiten (Remp_Max) Luftfüllanweisungen,
einen Positionierungsschritt (Pos_Pap) der Drosseleinheit (14) als Funktion der Füllanweisung, der nach der Durchführung des Arbitrierungsschritts und bestimmt wird ein Schritt des Positionierens des Überdruckventils (13), das der Turbine (9) des Turboladers (7) zugeordnet ist, gemäß den Verwendungsbedingungen der Wärmekraftmaschine (6), wobei diese Verwendungsbedingungen als Längsdynamik typisiert sind volle Dauerlast in stabilisierter, sparsamer Art oder begünstigt die Beschleunigung des Temperaturanstiegs und das schnelle Ansaugen der Entleerungsvorrichtungen.

2. Verfahren nach Anspruch 1, **dadurch gekennzeichnet, dass**, wenn die Verwendungsbedingungen der Wärmekraftmaschine (6) als Längsdynamik typisiert sind, um der Leistung der Wärmekraftmaschine Vorrang einzuräumen, die Positionierung des zugehörigen Überdruckventils (13) zur Turbine (9) des Turboladers (7) befindet sich zwischen einer vollständig geschlossenen Position und einer teilweise geschlossenen Position.

3. Verfahren nach Anspruch 1, **dadurch gekennzeichnet, dass**, wenn die Verwendungsbedingungen der Wärmekraftmaschine (6) als Volllast kontinuierlich stabilisiert eingegeben werden, die Positionierung des Überdruckventils (13) mit der Turbine (9) der Der Turbolader (7) befindet sich zwischen einer teilweise geöffneten Position und einer vollständig geöffneten Position.

4. Verfahren nach Anspruch 1, **dadurch gekennzeichnet, dass**, wenn die Verwendungsbedingungen der Wärmekraftmaschine (6) vom Kraftstoffverbrauchstyp sind, die Positionierung des Überdruckventils (13) der Turbine (9) des Turboladers (7) zugeordnet ist. ist in Abhängigkeit von der Erhöhung der an die Wärmekraftmaschine (6) angelegten Lastschwellen in einer teilweise geschlossenen Position unterhalb einer ersten Lastschwelle in einer teilweise geöffneten Position zwischen dieser ersten Schwelle und einer zweiten Schwelle in eine vollständig geöffnete Position zwischen dieser zweiten Schwelle und einer dritten Schwelle in einer Zwischenposition jenseits dieser dritten Lastschwelle.

5. Verfahren nach Anspruch 1, **dadurch gekennzeichnet, dass**, wenn die Verwendungsbedingungen der Wärmekraftmaschine (6) zugunsten der Beschleunigung des Temperaturanstiegs und der schnellen Einleitung der Entleerungsorgane typisiert sind, die Positionierung von Das der Turbine (9) des Turboladers (7) zugeordnete Überdruckventil (13) befindet sich in einer vollständig geöffneten Position.

6. Verfahren nach einem der vorhergehenden Ansprüche, **dadurch gekennzeichnet, dass** eine Unterscheidung zwischen diesen Verwendungsbedingungen durch Analyse mindestens eines Parameters erfolgt unter: der Motordrehzahl und ihrem Zeitgradienten, dem eingelegten Übersetzungsverhältnis, dem Fahrzeuggeschwindigkeit und - beschleunigung, Motorlast, Position (Pos_Pap) des Drosselklappengehäuses (14), Drehmomenttreiber (C_vc), Motorluftfüllanweisung (6), Vorabverschlechterung bei Die erzeugte Zündung und der maximale Sollwert für die Vorabverschlechterung, um dem Fahrer zu entsprechen, sind der Drehmomentsollwert, die Position des Beschleunigungspedals und sein Zeitgradient, die Höhe, Informationen vom elektronischen Korrektor von Flugbahn, der thermische Zustand des Motors (6), der im Ansaugverteiler herrschende Druck, der Zustand und die Verfügbarkeit der Vakuumversorgung, der Zeitgeberfluss und die Position des Bremspedals.

7. Verfahren nach einem der vorhergehenden Ansprüche, **dadurch gekennzeichnet, dass** es den Schritt umfasst, nur die erste Füllanweisung (Remp_LP) während einer Abschaltphase (C_Inj) des Einspritzmotors (6) zu berücksichtigen.

8. Verfahren nach einem der vorhergehenden Ansprüche, das **dadurch gekennzeichnet ist, dass** es ferner den Schritt des Hemmens der Implementierung des Verfahrens umfasst, wenn ein Vakuumniveau eines Fahrzeugbremsbehälters für unzureichend erachtet wird Fahrzeug bremsen.

9. Verfahren nach einem der vorhergehenden Ansprüche, **dadurch gekennzeichnet, dass** es ferner den Schritt des Hemmens der Implementierung des Verfahrens umfasst, wenn das Luftkompressionsverhältnis auf dem Niveau des Kompressors (11) wird unterhalb einer bestimmten Schwelle.

10. Verfahren nach Anspruch 9, **dadurch gekennzeichnet, dass** der ermittelte Schwellenwert des Luftkompressionsverhältnisses am Kompressor zwischen 1,05 und 1,2 liegt.

11. Verfahren nach einem der vorhergehenden Ansprüche, das **dadurch gekennzeichnet ist, dass** die erste Füllanweisung (Remp_LP) aus der Pumpgrenze (Lim_Pom) des Kompressors (11) eines entsprechenden Drucks (P1) bestimmt wird bei einem atmosphärischen Druck, der um einen Druckabfall im stromaufwärtigen Luftkreislauf und einen Druck (P2) stromabwärts des Kompressors (11) korrigiert ist, einer Ansaugtemperatur (T1) stromaufwärts des Kompressors (11)) und einen Ansaugluftstrom (Qair), der von einem Durchflussmesser gemessen oder von einem Füllmodell geschätzt wird.

12. Verfahren nach einem der vorhergehenden Ansprüche, **dadurch gekennzeichnet, dass** der Schritt des Korrigierens der ersten Füllanweisung (Remp_LP) in Abhängigkeit von den Drücken stromaufwärts (P1) und stromabwärts (P2) des Kompressors ausgeführt wird wenn eine Verzögerungszeit seit dem Zeitpunkt überschritten wurde, zu dem die Last der Wärmekraftmaschine (6) stark verringert wird, so dass das Drosselklappengehäuse (14) aus einer vollständig geöffneten Position sofort schließt und a annimmt vollständig geschlossene Position.

13. Verfahren nach einem der vorhergehenden Ansprüche, **dadurch gekennzeichnet, dass** die Erfassung des Pumpens des Kompressors (11) die folgenden Schritte umfasst:
- Filtern des Luftdrucks nach dem Kompressor (11) oder des Ansaugluftstroms,
- Berechnung der Anzahl der Schwingungen des Luftdrucks nach dem Kompressor (11) oder des Ansaugluftstroms um ihren gefilterten Wert;
- Berechnung der Amplituden und Frequenzen dieser Schwingungen.

## Claims

1. Method for controlling a motor vehicle thermal engine (6) comprising a turbocharger (7) which comprises a compressor (11) and a turbine (9), the compressor not being associated with a pressure relief valve compressor air, known as the "dump valve" which aims to protect the compressor from pumping and the turbine (9) being associated with a discharge valve (13), known as the "waste gate" which limits the pressure and the flow of exhaust in this turbine (9), and a throttle body (14) for authorizing an air passage at the intake, **characterized in that** said method comprises:
a step for detecting the pumping of the compressor (11),
a step of determining a first air filling instruction corresponding to a pumping limit (Remp_LP) to be applied to said butterfly housing (14),
a step of correcting said first filling instruction (Remp_LP),
a step of determining a second air filling instruction corresponding to a maximum filling (Remp_Max) making it possible to comply with a torque instruction corresponding to a will of a driver (C_vc),
a step of arbitration between said first (Remp_LP) and second (Remp_Max) air filling instructions,
a positioning step (Pos_Pap) of said throttle unit (14) as a function of said filling instruction determined following the implementation of said arbitration step and
a step of positioning the relief valve (13) associated with the turbine (9) of the turbocharger (7) as a function of conditions of use of the heat engine (6), these conditions of use being typed longitudinal dynamics, typed full continuous load in stabilized, fuel economy type or favoring the acceleration of the rise in temperature and the rapid priming of the depollution devices.

2. Method according to claim 1, **characterized in that** when the conditions of use of said heat engine (6) are typed longitudinal dynamics to give priority to the performance of the heat engine, the positioning of the associated relief valve (13) to the turbine (9) of the turbocharger (7) is between a fully closed position to a partially closed position.

3. Method according to claim 1, **characterized in that** when the conditions of use of said thermal engine (6) are typed full load continuous stabilized, the positioning of the relief valve (13) associated with the turbine (9) of the turbocharger (7) is between a partially open position to a fully open position.

4. Method according to claim 1, **characterized in that** when the conditions of use of said heat engine (6) are fuel economy type, the positioning of the relief valve (13) associated with the turbine (9) of the turbocharger (7) is, as a function of increasing load thresholds applied to the heat engine (6), in a partially closed position below a first load threshold, in a partially opened position between this first threshold and a second threshold, in a fully open position between this second threshold and a third threshold, in an intermediate position beyond this third load threshold.

5. Method according to claim 1, **characterized in that** when the conditions of use of said heat engine (6) are typified in favor of the acceleration of the rise in temperature and the rapid initiation of the depollution organs, the positioning of the relief valve (13) associated with the turbine (9) of the turbocharger (7) is in a fully open position.

6. Method according to any one of the preceding claims, **characterized in that** a distinction between said conditions of use is made by analysis of at least one parameter among: the engine speed and its time gradient, the gear ratio engaged, the vehicle speed and acceleration, engine load, position (Pos_Pap) of the throttle body (14), torque driver will (C_vc), engine air filling instruction (6), advance degradation at the ignition produced and the maximum advance degradation setpoint in order to comply with the driver will torque setpoint, the position of the acceleration pedal and its time gradient, the altitude, information from the electronic corrector of trajectory, the thermal state of the engine (6), the pressure prevailing in the intake manifold, the state and availability of the vacuum supply, the flow of timers and the position of the brake pedal.

7. Method according to any one of the preceding claims, **characterized in that** it comprises the step of taking into account only said first filling instruction (Remp_LP) during an injection cut-off phase (C_Inj) of said thermal engine (6).

8. Method according to any one of the preceding claims, **characterized in that** it further comprises the step of inhibiting the implementation of said method if a vacuum level of a vehicle brake tank is deemed insufficient for brake the vehicle.

9. Method according to any one of the preceding claims, **characterized in that** it further comprises the step of inhibiting the implementation of said method if the air compression ratio at the level of the compressor (11) becomes below a certain threshold.

10. The method of claim 9, **characterized in that** the determined threshold of the air compression ratio at the compressor is between 1.05 and 1.2.

11. Method according to any one of the preceding claims, **characterized in that** said first filling instruction (Remp_LP) is determined from said pumping limit (Lim_Pom) of said compressor (11), of a pressure (P1) corresponding at an atmospheric pressure corrected for a pressure drop in the upstream air circuit and a pressure (P2) downstream of said compressor (11), of an intake temperature (T1) upstream of said compressor (11), and an intake air flow (Qair) measured by a flow meter or estimated by a filling model.

12. Method according to any one of the preceding claims, **characterized in that** the step of correcting the first filling instruction (Remp_LP) is carried out as a function of the pressures upstream (P1) and downstream (P2) of the compressor if a delay time has been exceeded since the instant when there is a sharp reduction in the load of the heat engine (6) so that the throttle body (14), from a fully open position, immediately closes and adopts a fully closed position.

13. Method according to any one of the preceding claims, **characterized in that** the detection of the pumping of the compressor (11) comprises the steps of:
- Filtering the air pressure downstream of the compressor (11) or the intake air flow,
- Calculation of the number of oscillations of the air pressure downstream of the compressor (11) or of the intake air flow around their filtered value,
- Calculation of the amplitudes and frequencies of these oscillations.
